# FASCICULE DE BREVET EUROPEEN

(11) **EP 4 669 905 B1**
(45) Date de publication et mention de la délivrance du brevet: **25.11.2026**
(21) Numéro de dépôt: 24711249.3
(22) Date de dépôt: 22.01.2024
(51) Int. Cl.: F21S 43/27, F21S 43/50, F21S 43/14, F21S 43/15, F21S 43/19, F21S 43/37, F21S 43/40, F21W 103/55, B60Q 1/00

(54) **BLOC OPTIQUE DE SIGNALISATION DESTINÉ À ÊTRE INTÉGRÉ DANS UN PROJECTEUR DE VÉHICULE AUTOMOBILE**
OPTISCHE SIGNALEINHEIT ZUR INTEGRATION IN EINEN KRAFTFAHRZEUGSCHEINWERFER
OPTICAL SIGNALLING UNIT INTENDED TO BE INTEGRATED INTO A MOTOR-VEHICLE HEADLAMP

(30) Priorité: 24.02.2023 FR 2301694
(43) Date de publication de la demande: 31.12.2025
(73) Titulaire: Stellantis Auto SAS, 78300 Poissy (FR)
(72) Inventeur: VIDEIRA, Filipe, 78140 VELIZY VILLACOUBLAY (FR)
(74) Mandataire: ESIP
(86) Numéro de dépôt international: PCT/FR2024/050082
(87) Numéro de publication internationale: WO 2024/175840

(56) Documents cités:
- EP-A1- 3 315 853
- EP-B1- 3 508 378
- CN-A- 111 076 145
- CN-U- 217 131 141
- FR-A1- 3 103 538
- KR-B1- 102 446 510

## Description

### [Domaine technique]

La présente invention revendique la priorité de la demande française 2301694 déposée le 24.02.2023.

La présente invention concerne d'une manière générale le domaine des projecteurs d'éclairage et de signalisation pour véhicules automobiles. Elle vise en particulier un bloc optique de signalisation destiné à être intégré dans un tel projecteur et apte à participer à au moins une fonction photométrique de signalisation.

### [Technique antérieure]

Les exigences réglementaires en matière de signalisation des véhicules automobiles imposent la présence à l'avant des véhicule de modules lumineux aptes à assurer la fonction feu diurne, couramment désignée sous l'acronyme anglais DRL (pour « Daytime Running Light ») et devant être activée automatiquement dès lors que le véhicule se déplace vers l'avant et que les feux de route ou de croisement sont éteints afin d'accroître sa visibilité dans des conditions de lumière du jour.

Cette fonction feu diurne dont la couleur d'émission lumineuse est blanche peut être de assurée au moins partiellement de manière connue par deux blocs optiques de signalisation implantés des deux côtés latéraux de la face avant du véhicule et comportant chacun :
- une carte électronique portant au moins une source lumineuse,
- un bâti creux allongé ouvert à l'avant et sur lequel est montée fixement ladite carte électronique, ledit bâti étant délimité par une semelle, un toit, deux parois latérales d'extrémité et une paroi de fond dont la face intérieure avant présente au moins une surface réfléchissante apte à réfléchir vers l'avant les rayons lumineux générés par ladite au moins une source lumineuse,
- une lunette rapportée fixement sur la bordure périphérique avant dudit bâti et délimitant une fenêtre de passage pour les rayons lumineux réfléchis par ladite au moins une surface réfléchissante, ladite lunette comprenant également des moyens d'attache aptes à coopérer avec des moyens complémentaires ménagés sur le bâti afin d'assurer sa fixation sur ce dernier. Le document KR 102 446 510 B1 divulgue un tel bloc optique de signalisation.

Ces deux blocs optiques peuvent être soit implantés dans la calandre du véhicule au dessus des deux projecteurs de ce véhicule, soit intégrés directement à ces projecteurs en venant se loger fixement chacun dans une cavité ménagée dans leur boîtier.

Dans ce dernier cas de figure, la lunette de chacun de ces blocs optiques ne peut être cachée par la peau de pare-chocs et demeure visible au travers de la glace extérieure de couverture du projecteur correspondant, notamment au niveau de ses deux portions latérales d'extrémité débordant latéralement de la fenêtre de passage dont la largeur doit être suffisamment importante pour y permettre l'implantation d'un fut de vissage permettant d'assurer la fixation de cette lunette par vissage sur le boîtier de ce bloc optique.

Cette largeur relativement importante des portions latérales d'extrémité de la lunette induit en outre un certain écart entre la surface éclairée de ce bloc optique (i.e. : celle de la fenêtre de passage) et le bord périphérique de la cavité du boîtier du projecteur dans lequel vient se loger ce bloc optique, ce qui nuit au rendu visuel du projecteur depuis l'extérieur du véhicule.

### [Exposé de l'invention]

La présente invention vise à améliorer la situation.

Elle propose à cet effet un bloc optique de signalisation destiné à être intégré dans un projecteur de véhicule automobile, ledit bloc optique comportant :
- une carte électronique portant au moins une source lumineuse,
- un bâti creux allongé ouvert à l'avant et sur lequel est montée fixement ladite carte électronique, ledit bâti étant délimité par une semelle, un toit, deux parois latérales d'extrémité et une paroi de fond dont la face intérieure avant présente au moins une surface réfléchissante apte à réfléchir vers l'avant les rayons lumineux générés par ladite au moins une source lumineuse,
- une lunette rapportée fixement sur la bordure périphérique avant dudit bâti et délimitant une fenêtre de passage pour les rayons lumineux réfléchis par ladite au moins une surface réfléchissante, ladite lunette comprenant également des moyens d'attache aptes à coopérer avec des moyens complémentaires ménagés sur le bâti afin d'assurer sa fixation sur ce dernier ;
caractérisé en ce que lesdits moyens d'attache comprennent une première patte à section en L comprenant une branche principale saillant longitudinalement à l'arrière de l'une des portions latérales d'extrémité de ladite lunette ainsi qu'une branche secondaire en retour d'équerre prenant racine à l'extrémité libre de ladite branche principale et pourvue d'un orifice, cette branche secondaire étant apte à venir coiffer l'extrémité arrière d'un premier fût de vissage saillant longitudinalement à l'arrière de la portion d'extrémité latérale correspondante de ladite paroi de fond du bâti et dans lequel vient se visser une vis de fixation ayant préalablement traversé ledit orifice.

Le fait de prévoir une telle patte à section en L au niveau d'une portion latérale d'extrémité de la lunette permet de limiter considérablement la largeur de cette portion latérale d'extrémité débordant latéralement de la fenêtre de passage, de sorte à obtenir une rendu visuel depuis l'extérieur du projecteur plus qualitatif et à limiter l'écartement entre la surface éclairée du bloc optique et le bord périphérique de la cavité du boîtier du projecteur dans lequel vient se loger ce bloc optique.

Selon des caractéristiques préférées dudit bloc optique selon l'invention :
- la branche principale de ladite première patte s'étend suivant un plan sensiblement perpendiculaire à la direction d'allongement dudit bloc optique ;
- l'une des parois latérales d'extrémité dudit bâti présente une découpe dans laquelle vient se loger une portion de la branche principale de ladite première patte ;
- lesdits moyens d'attache comprennent également un second fût de vissage saillant longitudinalement à l'arrière de l'autre desdites portions latérales d'extrémité de ladite lunette et dans lequel vient se visser une vis de fixation ayant préalablement traversé un orifice ménagé dans une seconde patte saillant latéralement de la paroi latérale d'extrémité correspondante dudit bâti ;
- ledit bloc optique comporte également un écran diffuseur refermant ladite fenêtre de passage et venu de moulage d'une seule pièce à partir d'un polymère thermoplastique translucide ;
- ledit bloc optique comprend des fûts de vissage saillant longitudinalement à l'arrière de la paroi de fond dudit bâti et permettant d'assurer sa fixation par vissage sur le boîtier d'un dit projecteur ;
- ledit bâti comporte deux glissières d'axes longitudinaux s'étendant à ses deux extrémités latérales en dessous de ladite semelle et recevant chacune à coulissement un bord latéral respectif de ladite carte électronique de sorte que celle-ci s'étende parallèlement en dessous de cette semelle ; et/ou
- ladite semelle du bâti présente une découpe de passage s'étendant à l'aplomb de ladite au moins une source lumineuse de sorte à permettre aux rayons lumineux générés de se réfléchir sur ladite au moins une surface réfléchissante de la paroi de fond.

L'invention vise également sous un second aspect un projecteur pour véhicule automobile intégrant un tel bloc optique de signalisation.

L'invention vise enfin sous un troisième aspect un véhicule automobile comportant au moins un tel projecteur.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
- [Fig 1] représente une vue en perspective d'un projecteur avant pour véhicule automobile dépourvu de sa glace extérieure de couverture et intégrant un bloc optique de signalisation selon l'invention ;
- [Fig 2] est une vue en perspective du bloc optique de signalisation selon l'invention de trois quart avant ;
- [Fig 3] représente une vue en perspective du bloc optique de signalisation selon l'invention de trois quart arrière et dépourvu de sa lunette ;
- [Fig 4] est une vue éclatée en perspective du bloc optique de signalisation selon l'invention ;
- [Fig 5] représente une vue en section du bloc optique de signalisation selon l'invention pris suivant un plan sensiblement perpendiculaire à la direction d'allongement de ce bloc optique ; et
- [Fig 6] est une vue en section du bloc optique de signalisation selon l'invention pris suivant un plan parallèle à la direction d'allongement de ce bloc optique et illustrant le montage de la lunette sur le bâti.

### [Description détaillée]

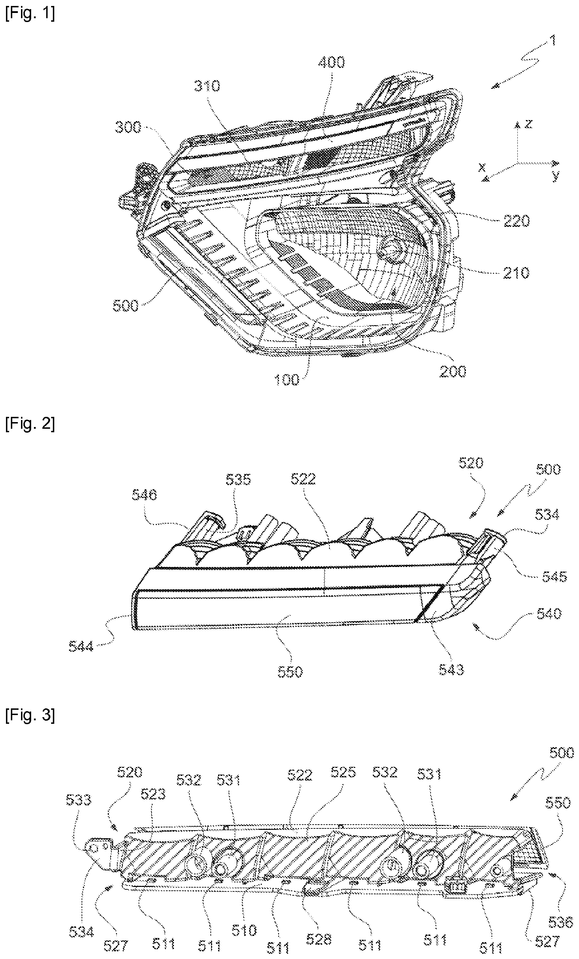

La figure 1 représente une vue en perspective d'un projecteur 1 de véhicule automobile destiné à être monté sur la structure de caisse de ce véhicule en s'intégrant aux contours des pièces de carrosserie adjacentes et à ceux de la peau de pare-chocs avant.

On définit par rapport à ce projecteur 1 un repère orthogonal XYZ comprenant trois axes perpendiculaires deux à deux, à savoir :
- un axe X, définissant une direction longitudinale, parallèle à l'axe longitudinal du véhicule,
- un axe Y, définissant une direction transversale, horizontale, qui avec l'axe X définit un plan XY horizontal, et
- un axe Z, définissant une direction verticale, perpendiculaire au plan XY horizontal.

Dans la description qui va suivre et par convention, les termes « avant », « arrière », « inférieur », et « supérieur » seront définis par rapport à la position de montage de ce projecteur 1 sur un tel véhicule automobile.

Par ailleurs, l'emploi du terme « sensiblement » indiquera qu'un léger écart est admis par rapport à une position ou disposition nominale prédéterminée, tout en restant inclus dans le cadre de l'invention. Par exemple, « sensiblement vertical » indique qu'un écart de l'ordre de 10° par rapport à une orientation strictement verticale est admis dans le cadre de l'invention.

Tel qu'illustré sur la figure 1, le projecteur 1 comporte un boîtier 100 venu avantageusement de moulage d'une seule pièce à partir d'un polymère thermoplastique et destiné à être fixé sur la structure de caisse du véhicule.

Le bord périphérique du boîtier 100 supporte une glace extérieure de couverture (non représentée afin de faciliter la lecture) venue avantageusement de moulage d'une seule pièce à partir d'un polymère thermoplastique translucide tel qu'un polycarbonate (PC) ou un poly-méthacrylate de méthyle (PMMA), et montée de manière étanche sur ce boîtier 100 (par exemple par soudure laser ou par collage) le long de la zone périphérique de son ouverture.

Le projecteur 1 comporte également trois modules lumineux logés à l'intérieur du boîtier 100, à savoir :
- un module lumineux d'éclairage 200 apte à assurer les fonctions feu de croisement et feu de route, ce module 200 comprenant une diode électroluminescente de puissance 210 associée à un réflecteur 220 monté sur le fond du boîtier 100 et réglable en site en azimut vis-à-vis de ce dernier ;
- un module lumineux de signalisation 300 apte à assurer la fonction feu indicateur de changement de direction et comprenant une ampoule halogène non visible associée à un réflecteur 310 ; et
- un module lumineux de signalisation apte à assurer la fonction feu diurne et se présentant sous la forme de deux blocs optiques 400, 500 logés fixement dans deux cavités ménagées dans ce boîtier 100, respectivement à proximité de son bord supérieur et à proximité de son bord latéral interne.

On va maintenant décrire plus en détails le bloc optique 500 à l'appui des figures 2 à 6.

Celui-ci comporte une carte électronique à circuits imprimées 510 de forme rectangulaire désignée couramment sous l'acronyme anglais PCB (pour « Printed Circuit Board ») et portant au moins une source lumineuse 511 (en l'espèce, six sources lumineuses ponctuelles constituées chacune par une diode électroluminescente 511).

Le bloc optique 500 comprend également un bâti creux allongé 520 de forme globalement parallélépipédique, venu de moulage d'une seule pièce à partir d'un polymère thermoplastique opaque.

Ouvert à l'avant, ce bâti 520 est délimité par une semelle 521, un toit 522, deux parois latérales d'extrémité 523, 524 et une paroi de fond 525 dont la face intérieure avant présente au moins une surface réfléchissante parabolique 526 (en l'espèce, six).

Cette réflectivité peut être par obtenue par le dépôt d'un revêtement réfléchissant ou plus simplement en réalisant le bâti 520 dans un matériau thermoplastique de couleur blanche.

Tel qu'illustré sur la figure 3, le bâti 520 comporte des moyens de montage de la carte électronique 510 comprenant deux glissières d'axes longitudinaux 527 s'étendant aux deux extrémités latérales de ce bâti 520 en dessous de la semelle 521, et recevant chacune à coulissement un bord latéral respectif de cette carte électronique 510 de sorte que celle-ci s'étende parallèlement en dessous de cette semelle 521.

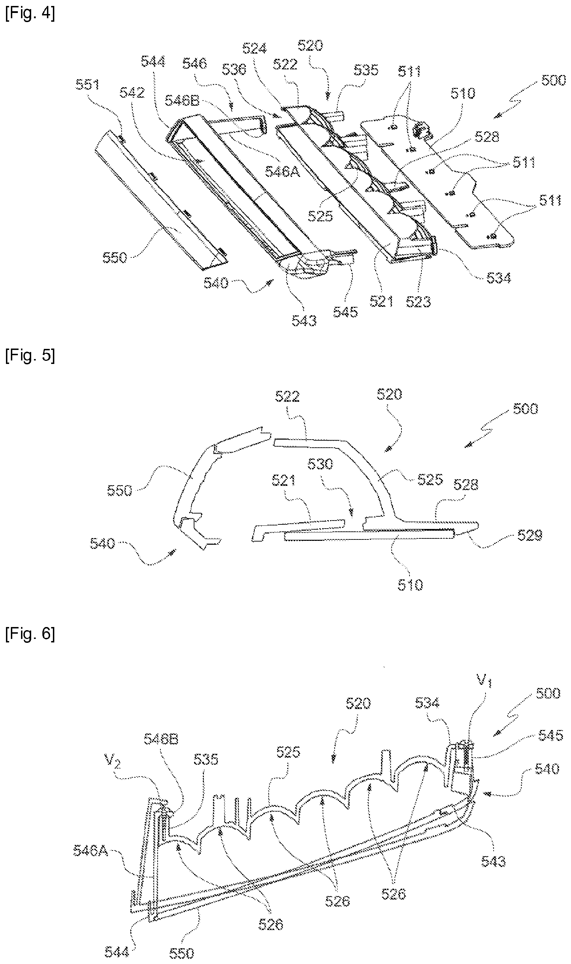

Comme illustré par les figures 4 et 5 et afin d'éviter tout jeu longitudinal de déplacement de la carte électronique 510 vis-à-vis du bâti 520 du fait des vibrations générées lors des phases de roulage du véhicule, les moyens de montage comprennent également une languette élastiquement déformable 528 saillant longitudinalement à l'arrière de la semelle 521 et portant à son extrémité libre une dent 529 apte à coopérer par encliquetage, en fin d'insertion à coulissement de la carte électronique 510, avec le bord arrière de cette dernière.

Comme on peut le constater sur cette figure 5, la semelle 521 du bâti 520 présente une découpe rectangulaire de passage 530 s'étendant à l'aplomb des diodes 511 de sorte à permettre aux rayons lumineux générés par ces dernières de traverser cette semelle 521 et de se réfléchir sur les surfaces réfléchissantes 526 de la paroi de fond 525.

En référence de nouveau à la figure 3, le bâti 520 comporte deux fûts de vissage 531 saillant longitudinalement à l'arrière de sa paroi de fond 525 et permettant d'assurer la fixation du bloc optique 500 sur le boîtier 100 à l'aide de vis non représentés traversant une paroi non visible de ce boîtier 100 constituant le fond de la cavité dans laquelle vient se loger ce bloc optique 500.

Le bâti 520 présente également des moyens de guidage destinés à assurer un positionnement adéquat de ce bloc optique 500 avant sa fixation par vissage sur le boîtier 100. Ces moyens de guidage sont en l'espèce constitués par deux manchons cylindriques 532 saillant longitudinalement à l'arrière de la paroi de fond 525, chacun à proximité d'un fût de vissage 531 correspondant, et prévus pour venir s'emboiter sur des pions à section en croix non visibles saillant longitudinalement vers l'avant depuis ladite paroi de ce boîtier 100 constituant le fond de la cavité dans laquelle vient se loger ce bloc optique 500.

Le bloc optique 500 comprend également une lunette 540 venue de moulage d'une seule pièce à partir d'un polymère thermoplastique opaque et rapportée fixement sur la bordure périphérique avant du bâti 520. Cette lunette 540 délimite une fenêtre de passage 542 pour les rayons lumineux réfléchis par les surfaces réfléchissantes 526.

Le bloc optique 500 peut comprendre également de manière avantageuse un écran diffuseur 550 refermant cette fenêtre de passage 542 et venu de moulage d'une seule pièce à partir d'un polymère thermoplastique translucide tel qu'un polycarbonate (PC) ou un poly-méthacrylate de méthyle (PMMA).

Cet écran diffuseur 550 est rapporté fixement sur la lunette 540 par l'intermédiaire d'une pluralité de pattes de clipsage élastiquement déformables 551 coopérant par encliquetage avec le pourtour de cette fenêtre de passage 542.

Tel qu'illustré par les figures 2, 4 et 6, la lunette 540 comporte des moyens d'attache saillant à l'arrière de ses deux portions latérales d'extrémité 543, 544 et aptes à coopérer avec des moyens complémentaires ménagés sur le bâti 520 afin d'assurer sa fixation sur ce dernier.

Ces moyens d'attache comprennent un fût de vissage 545 saillant longitudinalement à l'arrière de la portion latérale d'extrémité 543 de la façade 541 et dans lequel vient se visser une vis de fixation V₁ ayant préalablement traversé un orifice 533 ménagé dans une patte 534 saillant latéralement de la paroi latérale d'extrémité 523 du bâti 520 (voir figure 6).

Selon l'invention, ces moyens d'attache comprennent également une patte à section en L 546 comprenant une branche principale 546A saillant longitudinalement à l'arrière de la portion latérale d'extrémité 544 de la lunette 540 et suivant un plan sensiblement perpendiculaire à la direction d'allongement du bloc optique 500.

La patte 546 comprend également une branche secondaire en retour d'équerre 546B prenant racine à l'extrémité libre de cette branche principale 546A et pourvue d'un orifice, cette branche secondaire 546B étant apte à venir coiffer l'extrémité arrière d'un fût de vissage 535 saillant longitudinalement à l'arrière de l'extrémité latérale correspondante de la paroi de fond 525 du bâti 520 et dans lequel vient se visser une vis de fixation V₂ ayant préalablement traversé cet orifice (voir figure 6).

Comme on peut le remarquer sur les figures 1 et 2, le fait de prévoir une telle patte 546 au niveau de la portion latérale d'extrémité 544 de la lunette 540, plutôt qu'un fût de vissage tel que 545, permet de limiter considérablement la largeur de cette portion latérale d'extrémité 544 débordant latéralement de la fenêtre de passage 542, de sorte à obtenir une rendu visuel depuis l'extérieur du projecteur plus qualitatif et à limiter l'écartement entre la surface éclairée du bloc optique 500 et le bord périphérique de la cavité du boîtier du projecteur 1 dans lequel vient se loger ce bloc optique 500.

Afin de permettre une réduction encore améliorée de la largeur de la portion latérale d'extrémité 544 de la lunette 540 et tel qu'illustré notamment par les figures 3 et 4, la paroi latérale d'extrémité 524 du bâti 520 présente une découpe 536 dans laquelle vient se loger une portion de la branche principale 546A de la patte 546.

On comprendra que la présence de la patte 546 entraine une cinématique d'assemblage particulière de la lunette 540 sur le bâti 520.

Tel qu'illustré par la figure 6 en traits interrompus, cette lunette 540 doit ainsi être présentée en biais vis-à-vis de ce bâti 520 de telle sorte à permettre de positionner la branche secondaire en retour d'équerre 546B de sa patte 546 derrière l'extrémité arrière du fût de vissage 535.

La lunette 540 doit ensuite être pivotée vers sa position de montage de sorte à ce que l'extrémité arrière de son fût de vissage 545 vienne en butée contre la patte 534 de ce bâti 520 comme illustré en traits pleins sur cette figure 6. Le vissage des vis V₁ et V₂ peut dès lors être effectuée pour assurer la fixation de cette lunette 540 au bâti 520.

De nombreuses variantes sont envisageables et on rappelle à cet égard que la présente invention ne se limite pas aux formes de réalisation décrites et représentées, mais englobe également toutes les variantes d'exécution à la portée de l'homme du métier, dans le cadre des revendications annexées. L'invention peut notamment être mise en œuvre dans des blocs optiques participant à d'autres fonctions de signalisation.

## Revendications

1. Bloc optique de signalisation (500) destiné à être intégré dans un projecteur (1) de véhicule automobile, ledit bloc optique (500) comportant :
- une carte électronique (510) portant au moins une source lumineuse (511),
- un bâti creux allongé (520) ouvert à l'avant et sur lequel est montée fixement ladite carte électronique (510), ledit bâti (520) étant délimité par une semelle (521), un toit (522), deux parois latérales d'extrémité (523, 524) et une paroi de fond (525) dont la face intérieure avant présente au moins une surface réfléchissante (526) apte à réfléchir vers l'avant les rayons lumineux générés par ladite au moins une source lumineuse (511),
- une lunette (540) rapportée fixement sur la bordure périphérique avant dudit bâti (520) et délimitant une fenêtre de passage (542) pour les rayons lumineux réfléchis par ladite au moins une surface réfléchissante (526), ladite lunette (540) comprenant également des moyens d'attache (545, 546) aptes à coopérer avec des moyens complémentaires (534 , 535) ménagés sur le bâti (520) afin d'assurer sa fixation sur ce dernier ;
**caractérisé en ce que** lesdits moyens d'attache comprennent une première patte à section en L (546) comprenant une branche principale (546A) saillant longitudinalement à l'arrière de l'une (544) des portions latérales d'extrémité (543, 544) de ladite lunette (540) ainsi qu'une branche secondaire en retour d'équerre (546B) prenant racine à l'extrémité libre de ladite branche principale et pourvue d'un orifice, cette branche secondaire (546B) étant apte à venir coiffer l'extrémité arrière d'un premier fût de vissage (535) saillant longitudinalement à l'arrière de la portion d'extrémité latérale correspondante de ladite paroi de fond (525) du bâti (520) et dans lequel vient se visser une vis de fixation (V₂) ayant préalablement traversé ledit orifice.

2. Bloc optique de signalisation (500) selon la revendication 1, **caractérisé en ce que** la branche principale (546A) de ladite première patte (546) s'étend suivant un plan sensiblement perpendiculaire à la direction d'allongement dudit bloc optique (500).

3. Bloc optique de signalisation (500) selon l'une des revendications 1 ou 2, **caractérisé en ce que** l'une (524) des parois latérales d'extrémité (523, 524) dudit bâti (520) présente une découpe (536) dans laquelle vient se loger une portion de la branche principale (546A) de ladite première patte (546).

4. Bloc optique de signalisation (500) selon l'une des revendications 1 à 3, **caractérisé en ce que** lesdits moyens d'attache comprennent également un second fût de vissage (545) saillant longitudinalement à l'arrière de l'autre (543) desdites portions latérales d'extrémité (543, 544) de ladite lunette (540) et dans lequel vient se visser une vis de fixation (V₁) ayant préalablement traversé un orifice (533) ménagé dans une seconde patte (534) saillant latéralement de la paroi latérale d'extrémité correspondante (523) dudit bâti (520).

5. Bloc optique de signalisation (500) selon l'une des revendications 1 à 4, **caractérisé en ce qu'**il comporte également un écran diffuseur (550) refermant ladite fenêtre de passage (542) et venu de moulage d'une seule pièce à partir d'un polymère thermoplastique translucide.

6. Bloc optique de signalisation (500) selon l'une des revendications 1 à 5, **caractérisé en ce qu'**il comprend des fûts de vissage (531) saillant longitudinalement à l'arrière de la paroi de fond (525) dudit bâti (520) et permettant d'assurer sa fixation par vissage sur le boîtier (100) d'un dit projecteur (1).

7. Bloc optique de signalisation (500) selon l'une des revendications 1 à 6, **caractérisé en ce que** ledit bâti (520) comporte deux glissières d'axes longitudinaux (527) s'étendant à ses deux extrémités latérales en dessous de ladite semelle (521) et recevant chacune à coulissement un bord latéral respectif de ladite carte électronique (511) de sorte que celle-ci s'étende parallèlement en dessous de cette semelle (521).

8. Bloc optique de signalisation (500) selon la revendication 7, **caractérisé en ce que** ladite semelle (521) du bâti (520) présente une découpe de passage (530) s'étendant à l'aplomb de ladite au moins une source lumineuse (511) de sorte à permettre aux rayons lumineux générés de se réfléchir sur ladite au moins une surface réfléchissante (526) de la paroi de fond (525).

9. Projecteur (1) pour véhicule automobile **caractérisé en ce qu'**il intègre un bloc optique de signalisation (500) selon l'une des revendications 1 à 8.

10. Véhicule automobile **caractérisé en ce qu'**il comporte au moins un projecteur (1) selon la revendication 9.

## Patentansprüche

1. Optische Signaleinheit (500) zum Einbau in einen Kraftfahrzeugscheinwerfer (1), wobei die optische Einheit (500) aufweist:
- eine elektronische Karte (510), die mindestens eine Lichtquelle (511) trägt,
- einen länglichen Hohlrahmen (520), der nach vorn offen ist und auf dem die elektronische Karte (510) fest angebracht ist, wobei der Rahmen (520) durch eine Sohle (521), ein Dach (522) und zwei Seitenendwände begrenzt ist (523, 524) und einer Bodenwand (525), deren vordere Innenseite mindestens eine reflektierende Oberfläche (526) aufweist, die in der Lage ist, die von der mindestens einen Lichtquelle (511) erzeugten Lichtstrahlen nach vorne zu reflektieren,
- eine Lünette (540), die fest an der vorderen Umfangskante des Rahmens (520) angebracht ist und ein Durchgangsfenster (542) für die von der mindestens einen reflektierenden Oberfläche (526) reflektierten Lichtstrahlen begrenzt, wobei die Lünette (54) umfasst Befestigungsmittel (545, 546), die mit komplementären Mitteln (534, 535) zusammenwirken können, die an dem Rahmen (520) vorgesehen sind, um seine Befestigung an diesem sicherzustellen;
**dadurch gekennzeichnet, dass** die Befestigungsmittel einen ersten L-förmigen Lappen (546) umfassen, der einen Hauptschenkel (546A) umfasst, der in Längsrichtung hinter einem (544) der seitlichen Endabschnitte (543, 544) der Lünette vorsteht (540) sowie einen am freien Ende des Hauptschenkels wurzelnden, mit einer Öffnung versehenen Winkelzweig (546B), wobei dieser Sekundärzweig (546B) geeignet ist, das hintere Ende eines ersten Schraubschaftes (535) abzudecken, der in Längsrichtung hinter dem entsprechenden seitlichen Endabschnitt der Bodenwand (525) des Rahmens (520) vorsteht und in den eine Befestigungsschraube (V₂) eingeschraubt wird, die zuvor die Öffnung durchquert hat.

2. Optische Signaleinheit (500) nach Anspruch 1, **dadurch gekennzeichnet, dass** der Hauptschenkel (546A) des ersten Schenkels (546) sich in einer Ebene erstreckt, die im Wesentlichen senkrecht zur Längsrichtung der optischen Einheit (500) verläuft.

3. Optische Signaleinheit (500) nach einem der Ansprüche 1 oder 2, **dadurch gekennzeichnet, dass** eine (524) der seitlichen Endwände (523, 524) des Rahmens (520) einen Ausschnitt (536) aufweist, in den ein Teil des Hauptschenkels (546A) des ersten Schenkels (546) eingreift.

4. Optischer Signalblock (500) nach einem der Ansprüche 1 bis 3, **dadurch gekennzeichnet, dass** die Befestigungsmittel auch einen zweiten Schraubschaft (545) umfassen, der in Längsrichtung hinter dem anderen (543) der seitlichen Endabschnitte (543, 544) der Lünette (540) vorsteht und in den eine Befestigungsschraube (V₁) eingeschraubt wird, die zuvor durch eine Öffnung (533) in einer zweiten Lasche (534) hindurchgegangen ist seitlich von der entsprechenden Endseitenwand (523) des Rahmens (520) vorspringen.

5. Optischer Signalblock (500) nach einem der Ansprüche 1 bis 4, **dadurch gekennzeichnet, dass** er auch einen Diffusorschirm (550) aufweist, der das Durchgangsfenster (542) verschließt und aus einem einzigen Stück aus einem transluzenten thermoplastischen Polymer geformt ist.

6. Optische Signaleinheit (500) nach einem der Ansprüche 1 bis 5, **dadurch gekennzeichnet, dass** sie Schraubfässer (531) aufweist, die in Längsrichtung hinter der Bodenwand (525) des Rahmens (520) vorstehen und es ermöglichen, ihre Befestigung durch Verschrauben am Gehäuse (100) eines Scheinwerfers (1) sicherzustellen.

7. Optische Signaleinheit (500) nach einem der Ansprüche 1 bis 6, **dadurch gekennzeichnet, dass** der Rahmen (520) zwei Längsachsenführungen (527) aufweist, die sich an seinen beiden seitlichen Enden unterhalb der Sohle (521) erstrecken und jeweils einen entsprechenden seitlichen Rand der elektronischen Karte (511) gleitend aufnehmen, sodass diese sich parallel unterhalb der Sohle (521) erstreckt.

8. Optische Signaleinheit (500) nach Anspruch 7, **dadurch gekennzeichnet, dass** die Sohle (521) des Rahmens (520) einen Durchgangsausschnitt (530) aufweist, der sich senkrecht zu der mindestens einen Lichtquelle (511) erstreckt, sodass die erzeugten Lichtstrahlen auf die mindestens eine reflektierende Oberfläche (526) der Bodenwand (525) reflektiert werden können.

9. Scheinwerfer (1) für ein Kraftfahrzeug, **dadurch gekennzeichnet, dass** er eine optische Signaleinheit (500) nach einem der Ansprüche 1 bis 8 enthält.

10. Kraftfahrzeug, **dadurch gekennzeichnet, dass** es mindestens einen Scheinwerfer (1) nach Anspruch 9 aufweist.

## Claims

1. Optical signal unit (500) for integration in a motor vehicle headlight (1), said optical unit (500) comprising:
- an electronic card (510) carrying at least one light source (511),
- an elongate hollow frame (520) open at the front and on which said electronic card (510) is fixedly mounted, said frame (520) being delimited by a sole (521), a roof (522), two lateral end walls (523, 524) and a back wall (525) whose front inner face has at least one reflecting surface (526) capable of reflecting forward the light rays generated by said at least one light source (511),
- a bezel (540) fixed to the front peripheral edge of said frame (520) and defining a passage window (542) for the light rays reflected by said at least one reflecting surface (526), said bezel (540) also comprising attachment means (545, 546) able to cooperate with complementary means (534, 535) arranged on the frame (520) in order to ensure its attachment to the latter;
wherein said attachment means comprise a first tab with an L-shaped section (546) comprising a main branch (546 A) projecting longitudinally in the rear of one (544) of the lateral end portions (543, 544) of said bezel (540) as well as a secondary arm in the return of a right angle bracket (546 B) taking root at the free end of said main arm and provided with an orifice, this secondary arm (546 B) being able to cover the rear end of a first screwing shank (535) projecting longitudinally in the rear of the corresponding lateral end portion of said bottom wall (525) of the frame (520) and in which a fixing screw (V₂) having previously passed through said orifice is screwed.

2. Optical signal unit (500) according to claim 1, wherein the main branch (546 A) of said first tab (546) extends along a drawing substantially perpendicular to the elongation management of said optical unit (500).

3. Optical signal unit (500) according to one of claims 1 or 2, **characterised in that** one (524) of the end side walls (523, 524) of said frame (520) has a cutout (536) in which a portion of the main branch (546 A) of said first tab (546) is housed.

4. Optical signal unit (500) according to one of claims 1 to 3, wherein said attachment means also comprise a second screwing shank (545) projecting longitudinally in the rear of the other (543) of said lateral end portions (543, 544) of said bezel (540) and into which a fixing screw (V₁) screws having previously passed through an orifice (533) formed in a second tab (534) projecting laterally from the corresponding lateral end wall (523) of said frame (520).

5. Optical signal unit (500) according to one of claims 1 to 4, **characterised in that** it also comprises a diffuser screen (550) closing said passage window (542) and moulded in a single component from a translucent thermoplastic polymer.

6. Optical signal unit (500) according to one of claims 1 to 5, **characterised in that** it comprises screwing drums (531) projecting longitudinally in the rear of the bottom wall (525) of said frame (520) and making it possible to ensure its fixing by screwing onto the housing (100) of a said headlight (1).

7. Optical signal unit (500) according to one of claims 1 to 6, **characterised in that** said frame (520) comprises two slideways with longitudinal axes (527) extending at its two lateral ends below said sole (521) and each receiving a respective lateral edge of said electronic card (511) so that the latter extends parallel below this sole (521).

8. Optical signal unit (500) according to claim 7, **characterised in that** said sole (521) of the frame (520) has a passage cutout (530) extending vertically above said at least one light source (511) so as to allow the light rays generated to be reflected on said at least one reflecting surface (526) of the bottom wall (525).

9. Headlight (1) for a motor vehicle, **characterised in that** it incorporates an optical signal unit (500) according to one of claims 1 to 8.

10. Motor vehicle **characterised in that** it comprises at least one headlight (1) according to claim 9.
